(19)

**Europäisches Patentamt**

**European Patent Office**

**Office européen des brevets**

(11)  **EP 3 295 598 B1**

(12)  # EUROPEAN PATENT SPECIFICATION

(45) Date of publication and mention
of the grant of the patent:
**07.07.2021 Bulletin 2021/27**

(51) Int Cl.:
***H04L 5/00*** *(2006.01)*      ***H04L 1/00*** *(2006.01)*

(21) Application number: **16728419.9**

(86) International application number:
**PCT/SE2016/050436**

(22) Date of filing: **13.05.2016**

(87) International publication number:
**WO 2016/186552 (24.11.2016 Gazette 2016/47)**

(54) **UPLINK CONTROL INFORMATION FOR MULTIPLE DIFFERENT DOWNLNIK CARRIERS**

UPLINK-STEUERINFORMATIONEN FÜR MEHRERE UNTERSCHIEDLICHE DOWNLINK-TRÄGER

INFORMATIONS DE COMMANDE DE LIAISON MONTANTE POUR PORTEUSES MULTIPLES
DIFFÉRENTES DE LIAISON DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2015 US 201562162275 P**

(43) Date of publication of application:
**21.03.2018 Bulletin 2018/12**

(73) Proprietor: **Telefonaktiebolaget LM Ericsson
(publ)
164 83 Stockholm (SE)**

(72) Inventors:
• **ANDERSSON, Mattias
113 60 Stockholm (SE)**
• **CHENG, Jung-Fu
Fremont, California 94539 (US)**
• **SONG, Xinghua
Beijing 100102 (CN)**
• **YANG, Yu
170 62 Solna (SE)**

(74) Representative: **Zacco Sweden AB
Valhallavägen 117
Box 5581
114 85 Stockholm (SE)**

(56) References cited:
**US-A1- 2011 243 066**

• **ERICSSON ET AL: "Evaluation of PUCCH
Proposals for Carrier Aggregation", 3GPP
DRAFT; R1-102612, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. Montreal,
Canada; 20100510, 4 May 2010 (2010-05-04),
XP050419831, [retrieved on 2010-05-04]**
• **ALCATEL-LUCENT SHANGHAI BELL ET AL: "UCI
Multiplexing on PUSCH in case of SU-MIMO",
3GPP DRAFT; R1-102795 UCI MULTIPLEXING ON
PUSCH IN CASE OF SU-MIMO_FINAL, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Montreal,
Canada; 20100510, 7 May 2010 (2010-05-07),
XP050420381, [retrieved on 2010-05-07]**

**Description**

**RELATED APPLICATIONS**

This application claims priority to U.S. Provisional patent Application Serial Number 62/162275 filed May 15, 2015.

**BACKGROUND**

Carrier aggregation

The use of Long Term Evolution (LTE) carrier aggregation (CA), introduced in Rel-10 and enhanced in Rel-11, offers means to increase the peak data rates, system capacity and user experience by aggregating radio resources from multiple carriers that may reside in the same band or different bands and, for the case of inter-band time division duplex (TDD) CA, may be configured with different uplink/downlink (UL/DL) configurations. In Rel-12, carrier aggregation between TDD and frequency division duplex (FDD) serving cells is introduced to support a user equipment (UE) connecting to them simultaneously.

In Rel-13, LAA (Licensed-Assisted Access) has attracted a lot of interest in extending the LTE carrier aggregation feature towards capturing the spectrum opportunities of unlicensed spectrum in the 5GHz band. A wireless local area network (WLAN) operating in the 5GHz band nowadays already supports 80MHz in the field and 160MHz is to follow in Wave 2 deployment of IEEE 802.11ac. There are also other frequency bands, such as 3.5 GHz, where aggregation of more than one carrier on the same band is possible, in addition to the bands already widely in use for LTE. Enabling the utilization of at least similar bandwidths for LTE in combination with LAA as IEEE 802.11ac Wave 2 will support calls for extending the carrier aggregation framework to support more than 5 carriers. The extension of the CA framework beyond 5 carriers was approved to be one work item for LTE Rel-13. The objective is to support up to 32 carriers in both UL and DL.

To support up to 32 carriers in DL, the uplink control information (UCI), e.g. Hybrid Automatic Repeat and reQuest (HARQ) Acknowledge/Negative-ACK information (HARQ-ACK) bits will increase significantly. For each DL subframe, there is 1 or 2 HARQ-ACK bits per carrier depending on if spatial multiplexing is supported or not. Hence, for FDD, there can be up to 64 HARQ-ACK bits if there are 32 DL carriers. The number of HARQ-ACK bits for TDD is even larger to hundreds of bits depending on the TDD configuration. Therefore, new Physical Uplink Control Channel (PUCCH) format(s) supporting larger payload are necessary. Similarly, the piggyback of an increased number of UCI bits also motivates the enhancements on UCI on Physical Uplink Shared Channel (PUSCH).

PUCCH format

In LTE Rel-8, PUCCH format 1/1a/1b and PUCCH format 2/2a/2b are supported for scheduling request (SR), HARQ-ACK and periodic channel state information (CSI) reporting. The PUCCH resource is represented by a single scalar index, from which the phase rotation and the orthogonal cover sequence (only for PUCCH format 1/1a/1b) are derived. The use of a phase rotation of a cell-specific sequence together with orthogonal sequences provides orthogonality between different terminals in the same cell transmitting PUCCH on the same set of resource blocks.

In LTE Rel-10, PUCCH format 3 was introduced for carrier aggregation and TDD, when there are multiple downlink transmissions, (either on multiple carriers or multiple downlink subframes) but single uplink (either single carrier or single uplink subframe) for HARQ-ACK, SR and CSI feedback. Similarly, the PUCCH format 3 resource is also represented by a single scalar index from which the orthogonal sequence and the resource-block number can be derived. A length-5 orthogonal sequence is applied for PUCCH format 3 to support code multiplexing within one resource-block pair and a length-4 orthogonal sequence is applied for shorted PUCCH. See 3GPP TS 36.211 v12.5.0.

In LTE Rel-13, new PUCCH format design is ongoing to support a larger number of UCI bits.

HARQ-ACK codebook size

In general, the exact relationship between the number of HARQ-ACK bits and the transmitted signals can be referred to as the encoding codebook of a CA PUCCH scheme. It is evident that the codebook needs to be synchronized between the UE and the enhanced eNodeB (eNB) for the HARQ-ACK feedback signal to be correctly processed and understood and processed on both sides. Basically, there are three different approaches to *codebook adaptation:*

Codebook adapted to the number of detected (E)PDCCHs
Codebook adapted to the number of activated component carriers (CCs)

Codebook adapted to the number of configured CCs

The first option is clearly problematic since the UE may miss detecting (Enhanced) Physical Downlink Control Channels, (E)PDCCHs, from the eNB, which immediately leads to divergence of codebooks assumed by the two sides. HARQ operations and status can thus be corrupted rather frequently.

The second option provides improved stability and reliability over the first in the period between activation and de-activation of CCs. HARQ-ACK bit fields corresponding to CCs with no detected (E)PDCCHs are set to 0 (NAK) by the UE. The activation and de-activation of CC is performed via medium access control (MAC) control elements. Due to HARQ feedback errors in the (de)-activation message, this signaling is not very reliable. In addition, CCs can also be autonomously and hence unilaterally de-activated by the UE based on UE-side timers. Therefore, basing the codebook adaptation on the CC activation state could be error prone.

The third option is a slow codebook adaptation and seems at first glance to be less efficient and have worse link performance than first two options. However, it has been shown that it in fact has similar link performance as the first option 1, at least for scenarios that have up to 5 CCs aggregated and that use a certain type of linear block code for channel coding. This similar link performance is achieved with so-called smart eNB decoding that exploits the fact that the eNB is aware of the scheduled and non-scheduled carriers.

Smart decoding of HARQ-ACK

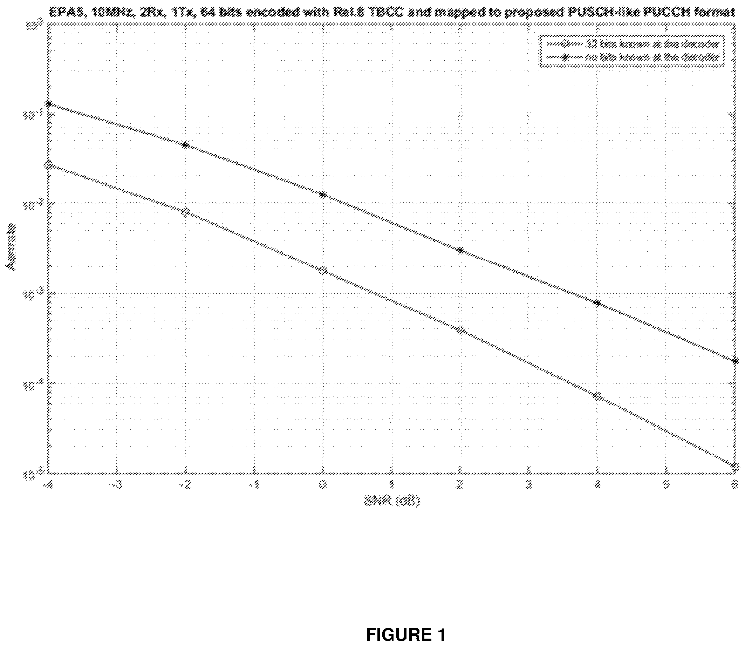

In more detail, HARQ-ACK feedback bits for carrier aggregation are concatenated according to the serving cell index. It is one or two HARQ-ACK bits per carrier per subframe depending on if spatial multiplexing (i.e. MIMO) is applied or not. Spatial bundling may be applied for TDD and therefore it is always one HARQ-ACK bit per carrier per subframe. When the carriers are configured but not scheduled, a UE will report NACK for these carriers and hence the information is known to the eNB. And eNB can apply the smart decoding of HARQ-ACK bits to improve the link performance, as shown in Figure 1.

In view of the above, the slow codebook adaptation approach was adopted in Rel-10. See 3GPP R1-103508.

In 3GPP Rel-13, however, CA enhancements are to support up to 32 CCs and/or a different type of channel coding is to be used. These differences compared to Rel-10 threaten the performance of the slow codebook adaptation approach coupled with smart decoding.

In this and other contexts, therefore, there remains a need for improved signaling of uplink control information for multiple different downlink carriers.

US 2011/243066 A1, describes methods and systems for transmitting uplink control information (UCI) and other feedback data such as HARQ ACK/NACK in wireless communication system using carrier aggregation.

Ericsson et al., "Evaluation of PUCCH Proposals for Carrier Aggregation", published in 3GPP Mobile Competence Centre, dated May 4, 2010, describes a PUCCH format based on DFT-S-OFDM for transmission of multiple ACK/NACK in the context of carrier aggregation (CA) being adopted for Rel-10 LTE.

Alcatel-Lucent Shanghai Bell et al., "UCI Multiplexing on PUSCH in case of SU-MIMO", published in 3GPP Mobile Competence Centre, dated May 7, 2010, describes UCI multiplexing on PUSCH for UL SU-MIMO that is focused on the number of CW's and CW selection aspect.

**SUMMARY**

The invention is defined by the independent claims. Furthermore, the embodiments of the invention are those defined by the claims. Moreover, examples and descriptions, which are not covered by the claims are presented not as embodiments of the invention, but as background art or examples useful for understanding the invention.

**BRIEF DESCRIPTION OF THE DRAWINGS**

Figure 1 is a line graph showing link performance with and without smart decoding according to some embodiments.
Figure 2 is a block diagram of a wireless communication system according to one or more embodiments.
Figure 3 is a logic flow diagram of a method performed by a wireless communication device according to one or more embodiments.
Figures 4A-4C are block diagrams of different embodiments for interspersing uplink control information known and unknown to a base station.
Figure 4D is a block diagram illustrating uplink control information known to a base station not being interspersed with uplink control information unknown to the base station.

Figure 5 is a block diagram of interleaving UCI information bits prior to channel encoding according to one or more embodiments.

Figure 6 is a block diagram of performing error detection encoding prior to interleaving UCI information bits according to one or more embodiments.

Figures 7A-7C are block diagrams of serving cell index configurations according to different embodiments.

Figure 7D is a table illustrating parameters for an interleaver according to one or more embodiments.

Figure 8 is a block diagram of a serving cell index configuration according to one or more embodiments.

Figure 9 is a logic flow diagram of a method performed by a base station according to one or more embodiments.

Figure 10 is a block diagram of a decoding trellis according to one or more embodiments.

Figure 11 is a block diagram of a parallel block encoder according to one or more embodiments.

Figure 12 is a block diagram of a wireless communication device according to one or more embodiments.

Figure 13 is a block diagram of a base station according to one or more embodiments.

## DETAILED DESCRIPTION

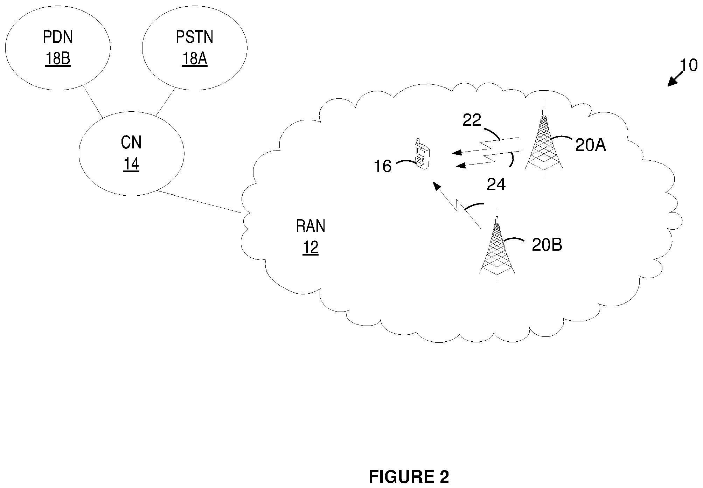

Figure 2 illustrates a wireless communication system 10 according to one or more embodiments. As shown in Figure 2, the system 10 (e.g., an LTE system) includes a radio access network (RAN) 12 and a core network (CN) 14. The RAN 12 wirelessly connects one or more wireless communication devices 16 to the CN 14. The CN 14 in turn connects the one or more wireless devices 16 to one or more external networks 18A, 18B. As shown, these one or more external networks 18A, 18B include a public switched telephone network (PSTN) 18A and a packet data network (PDN) 18B, such as the Internet.

The RAN 12 more specifically includes a plurality of base stations 20, two of which are shown as base station 20A and base station 20B. Base station 20A as shown is configured to transmit user data (i.e., traffic) to a wireless device 16 upon a first downlink carrier 22, e.g., over one or more user data channels such as the PDSCH/ePDCCH in an LTE system. The device 16 is also configured to receive user data upon a second downlink carrier 24, which may be transmitted by the same base station 20A or a different base station 20B (e.g., neighboring base station 20A). In general, therefore, the device 16 is configured to receive on multiple different downlink carriers 22, 24.

The device 16 in turn signals uplink control information (UCI) for the different downlink carriers 22, 24 to one or more of the base stations 20A, 20B. Uplink control information for a given downlink carrier as used herein is control information that the device 16 transmits in the uplink for controlling transmission of user data on that downlink carrier. Uplink control information may include, for example, Hybrid Automatic Repeat and reQuest (HARQ) Acknowledge/Negative-ACK information, scheduling request (SR) information, channel quality indicator information, precoding matrix indicator information, rank indication information, and the like. Uplink control information is distinguished from an uplink reference signal or a pilot signal, albeit known by the base station, e.g., because an uplink reference signal or pilot signal is used to estimate the uplink channel, rather than controlling transmission of user data on a downlink channel.

In any event, the UCI for the different downlink carriers may be collectively transmitted in the uplink on one or more uplink carriers as a UCI report. The device 16 in at least some embodiments is configured to periodically or aperiodically transmit such a UCI report, e.g., on the PUCCH and/or PUSCH in an LTE system, so as to transmit different UCI reports at different times and thereby update the base station 20 with fresh UCI. Regardless, the device 16 transmits the UCI report by including UCI for the multiple different downlink carriers 22, 24 within one or more information words, channel encoding the information word(s), and transmitting the resulting codeword(s) to the base station 20.

A portion of the UCI contained in the information word(s) is known by the base station 20, while another portion of the UCI is not known by the base station. Even though a portion of UCI is known by the base station 20, the device 16 nonetheless includes that BS-known UCI in the information word(s) along with the BS-unknown UCI.

In some embodiments, for example, the device 16 and base station 20 periodically or occasionally adapt and synchronize a codebook used for channel encoding and decoding (so that the UCI information can be correctly processed and understood on both sides). Codebook adaptation in this regard may be dictated or otherwise governed by, for example, how many downlink carriers 22, 24 are configured (e.g., how many of the carriers' parameters have been established by higher-layer signaling, such as RRC signaling), how many configured carriers 22, 24 are activated (e.g., how many of the carriers have been made available for use through lower-layer activation signaling, such as MAC signaling), or by some other state or condition of the downlink carriers 22, 24. Irrespective of the particular codebook adaptation approach, that adaptation aims at effectively tailoring the codebook to current UCI needs for those carriers. Under some circumstances, the codebook as adapted at any given time may "overestimate" the UCI needs for the carriers 22, 24, e.g., by allocating channel codes for UCI that does not actually need to be sent. This overestimation in one or more embodiments leads to the device 16 sending at least some UCI that is already known by the base station 20.

For example, if the codebook is dynamically adapted with the number of downlink carriers that are configured (or activated), irrespective of how many of the carriers are scheduled, codebook adaptation may "overestimate" UCI needs if the device 16 is not actually scheduled to receive user data on all of the configured (or activated) carriers 22, 24. As just one example in this regard, the device 16 may not actually need to send HARQ-ACK information for a downlink carrier that the device 16 was not scheduled to receive user data on. In at least some embodiments, though, the device 16 nonetheless transmits HARQ-ACK information for any non-scheduled downlink carriers according to the codebook in the form of default HARQ-ACK information (e.g., a NACK) that both the device 16 and base station 20 are preconfigured to associate with non-scheduled downlink carriers. In this case, therefore, the device 16 transmits HARQ-ACK information that is not known to the base station 20 for scheduled downlink carriers, as well as HARQ-ACK information that is known to the base station 20 for non-scheduled downlink carriers 22, 24. The device 16 does so by including the BS-known and BS-unknown UCI within one or more information word(s) for channel coding and transmission as a UCI report.

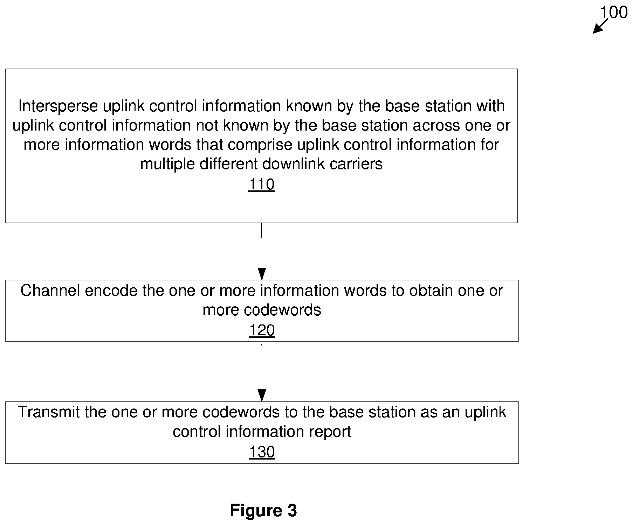

Regardless of the underlying reason why the base station 20 already has knowledge of a portion of the UCI it receives from the device 16 in a UCI report, the device 16 herein implements the method 100 shown in Figure 3 for signaling the UCI for the different downlink carriers 22, 24 to the base station. As shown, the method 100 notably includes interspersing UCI known by the base station 20 with UCI not known by the base station 20 across one or more information words that comprise UCI for multiple different downlink carriers (Block 110). The method 100 then includes channel encoding the one or more information words to obtain one or more codewords (Block 120), and transmitting the one or more codewords to the base station 20 as an uplink control information report (Block 130).

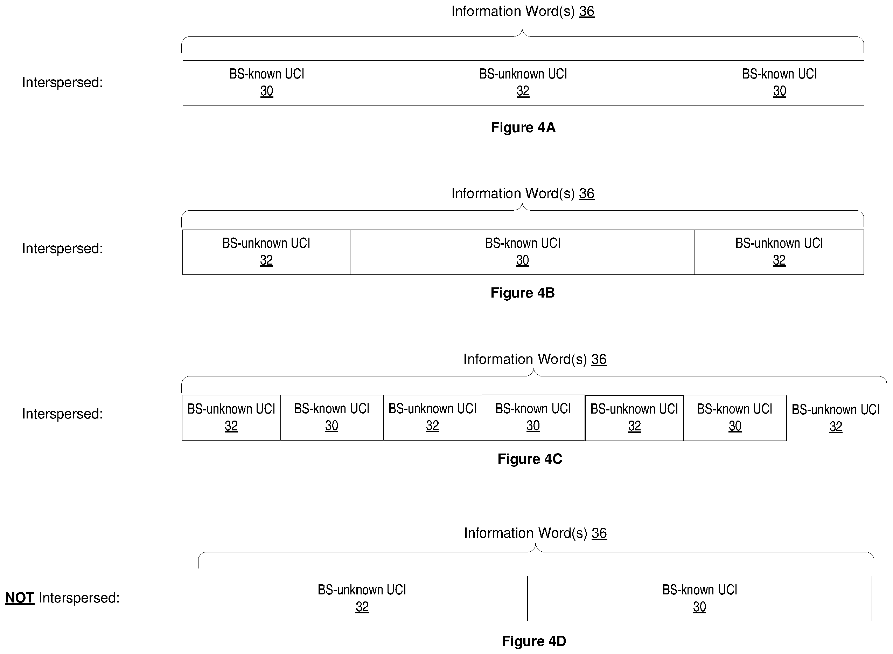

With BS-known UCI interspersed with BS-unknown UCI in the information word(s), either (i) BS-known UCI 30 is distributed or spread into two or more portions of the information word(s) 36 with each portion being separated by at least some BS-unknown UCI 32 as shown in Figure 4A; (ii) BS-unknown UCI 32 is distributed or spread into two or more portions of the information word(s) 36 with each portion being separated by at least some BS-known UCI 30 as shown in Figure 4B; or (iii) both BS-known UCI 30 and BS-unknown UCI 32 are distributed or spread in this way as shown in Figure 4C. This contrasts, for example, with a non-interspersed approach which would wholly clump BS-known UCI 30 together and wholly clump BS-unknown UCI 32 together in the information word(s) 36 as shown in Figure 4D.

In at least some embodiments, interspersing the BS-known UCI in this way proves advantageous for improving the link and/or decoding performance for UCI signaling. Indeed, the BS-known UCI assists in decoding other UCI neighboring that BS-known UCI in the information word(s). Rather than wholly clumping the BS-known UCI together and separately clumping the BS-unknown UCI together in the information word(s), interspersing the BS-known and BS-unknown UCI effectively distributes the BS-known UCI's decoding assistance to other parts of the information word(s). This avoids or at least minimizes effectively wasting the BS-known UCI's decoding assistance on neighboring UCI that is also BS-known, and instead more fully harnesses that decoding assistance for decoding BS-unknown UCI and thereby improving link and/or decoding performance (e.g., by increasing link SNR and/or decoding accuracy). In fact, if half of the UCI bits are known, placing the known bits at the beginning or the end gives worse performance in some cases than interspersing (e.g., alternating) known and unknown UCI bits.

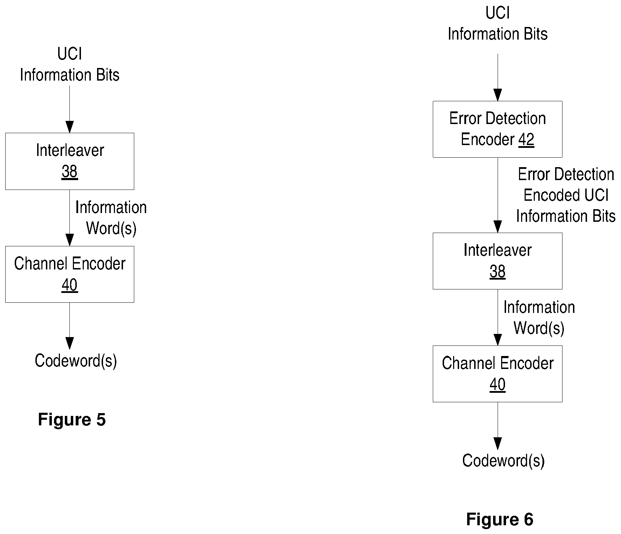

In one or more embodiments, the device 16 intersperses the BS-known UCI with the BS-unknown UCI by interleaving the BS-known UCI and the BS-unknown UCI. For example, the device 16 in at least some embodiments applies the UCI for the carriers 22, 24 to an interleaver 36 prior to channel encoding by a channel encoder 38, as shown in Figure 5 (e.g., to scramble the UCI bits). The interleaver may be for instance a bit reverse order (BRO) interleaver, a rectangular interleaver, the sub-block interleaver defined in section 5.1.4.2.1 of 3GPP TS 36.212 and described more fully below, the turbo code internal interleaver defined in section 5.1.3.2.3 of 3GPP TS 36.212 and described more fully below, a QPP interleaver with different constants, an m-sequence based interleaver, etc. In at least some embodiments, interleaving is done in a carrier-agnostic way, such that UCI even for a given one of the carriers is interleaved with UCI for one or more others of the carriers. That is, even a single carrier's UCI is advantageously distributed into two or more different portions of the information word(s).

In at least one embodiment, the device 16 is configured to add an error detecting code (e.g., a cyclic redundancy check/code) to the UCI prior to channel encoding, in order to assist the base station in detecting incorrect decoding. In one embodiment, the error detecting code is added prior to channel encoding but after interspersion, whereas in other embodiments the error detecting code is added even prior to interspersion. Figure 6 shows one example in this regard where an error detecting code is added by an error detector encoder 42 to the UCI information bits prior to the interleaver 38. This way, even the error detecting code bits are interleaved, rather than only the UCI bits.

Note, though, the number of input/output parameters for the interleaver(s) proposed in the above embodiments may not be the same as the number of carriers that the base station may configure/schedule. In this case, a <NULL> value may be used for the input/output of the interleaver. For the output of the interleaver, the <NULL> values are removed.

In other embodiments, by contrast, the device 16 intersperses the BS-known UCI with the BS-unknown UCI in accordance with a so-called serving cell index configuration received from the base station 20. This configuration indicates indexes for the different downlink carriers.

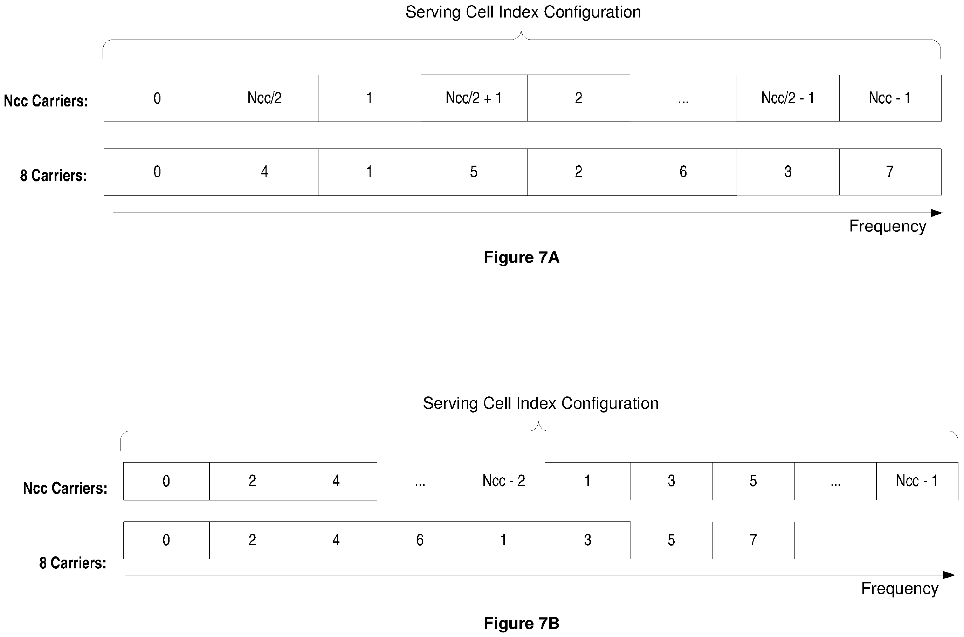

In one such embodiment, at least some of the different downlink carriers occur consecutively in the frequency domain but have non-consecutively ordered indexes as shown in Figures 7A-7C. The base station in this regard may configure the serving cell indices so that consecutive carriers in the frequency domain have non-consecutive cell indices. In this case, interspersion entails forming the one or more information words by concatenating UCI for the downlink carriers in order of the indexes.

For instance, when there are a number of (e.g., component) carriers available and supported, the base station 20 may configure the serving cell index of available carriers in the frequency domain with a jumping pattern or interleaved pattern. For example, as shown in Figure 7A for the case of Ncc = 8 downlink carriers, the base station 20 may schedule the carriers 22, 24 in the order of indexes 0, 4, 1, 5, 2, 6, 3, 7 (consecutively in the frequency domain), but the device 16 forms the UCI information word(s) by concatenating UCI for the carriers 22, 24 in the order of indexes 0, 1, 2, 3, 4, 5, 6, 7 (non-consecutively in the frequency domain). This way, BS-known UCI for the non-scheduled carriers (e.g., 3, 6, 7) is distributed in the information word(s) in order to assist with decoding of the BS-unknown UCI for the scheduled carriers (e.g., 0, 1, 4, 5). Figure 7B shows a different order in which the base station 20 may schedule the carriers 22, 24, e.g., in the order of indexes 0, 2, 4, 6, 1, 3, 5, 7 (consecutively in the frequency domain) for Ncc = 8 downlink carriers, while the device 16 forms the UCI information word(s) by concatenating UCI for the carriers 22, 24 in the order of indexes 0, 1, 2, 3, 4, 5, 6, 7 (non-consecutively in the frequency domain).

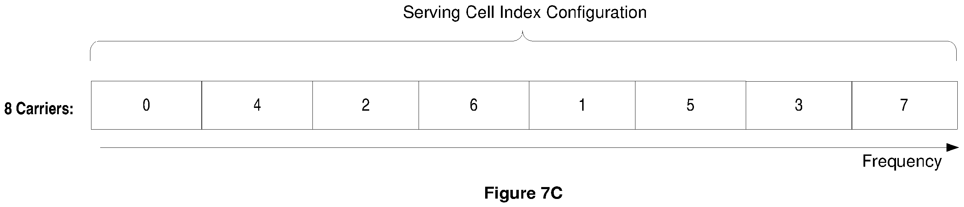

In another example, an interleaver is applied for serving cell index configuration so that consecutive carriers in the frequency domain are assigned with an interleaved index. In one example, a Bit Reverse Order (BRO) interleaver is applied to get the serving cell index configuration. For an input position with a binary representation of [bm-1 bm-2 ... b0], the BRO interleaved output position is given by the value with a binary representation of [b0 b1 ... bm-1]. For example, with an interleaver of length 16, for an input position of 6 = [1 0 1 0], the BRO interleaved output position is given by [0 1 0 1] = 3. An example of a serving index configuration for 8 carriers using BRO interleaver is shown in Figure 7C.

In another example, a sub-block interleaver defined in section 5.1.4.2.1 of 3GPP TS 36.212 is applied to get the serving cell index configuration. In particular, the bits input to the block interleaver are denoted by $d_0^{(i)}, d_1^{(i)}, d_2^{(i)}, ..., d_{D-1}^{(i)}$, where $D$ is the number of bits. The output bit sequence from the block interleaver is derived as follows:

(1) Assign $C_{subblock}^{CC} = 32$ to be the number of columns of the matrix. The columns of the matrix are numbered 0, 1, 2,..., $C_{subblock}^{CC} - 1$ from left to right.

(2) Determine the number of rows of the matrix $R_{subblock}^{CC}$, by finding minimum integer $R_{subblock}^{CC}$ such that:

$$D \leq \left( R_{subblock}^{CC} \times C_{subblock}^{CC} \right)$$

The rows of rectangular matrix are numbered 0, 1, 2,..., $R_{subblock}^{CC} - 1$ from top to bottom.

(3) If $\left( R_{subblock}^{CC} \times C_{subblock}^{CC} \right) > D$, then $N_D = \left( R_{subblock}^{CC} \times C_{subblock}^{CC} - D \right)$ dummy bits are padded such that $y_k = <NULL>$ for $k$= 0, 1,..., $N_D$-1. Then, $y_{N_D + k} = d_k^{(i)}$, $k$ = 0, 1,..., $D$-1, and the bit sequence $y_k$ is written into the $\left( R_{subblock}^{CC} \times C_{subblock}^{CC} \right)$ matrix row by row starting with bit $y_0$ in column 0 of row 0:

$$
\begin{array}{cccc}
y_0 & y_1 & y_2 & \cdots & y_{C_{subblock}^{CC}-1} \\
y_{C_{subblock}^{CC}} & y_{C_{subblock}^{CC}+1} & y_{C_{subblock}^{CC}+2} & \cdots & y_{2C_{subblock}^{CC}-1} \\
\vdots & \vdots & \vdots & \ddots & \vdots \\
y_{(R_{subblock}^{CC}-1) \times C_{subblock}^{CC}} & y_{(R_{subblock}^{CC}-1) \times C_{subblock}^{CC}+1} & y_{(R_{subblock}^{CC}-1) \times C_{subblock}^{CC}+2} & \cdots & y_{(R_{subblock}^{CC} \times C_{subblock}^{CC}-1)}
\end{array}
$$

(4) Perform the inter-column permutation for the matrix based on the pattern $\langle P(j) \rangle_{j \in \{0,1,...,C_{subblock}^{CC}-1\}}$ that is shown in table 5.1.4-2 below, where P(j) is the original column position of the j-th permuted column. After permutation of the columns, the inter-column permuted $\left( R_{subblock}^{CC} \times C_{subblock}^{CC} \right)$ matrix is equal to

$$y_{P(0)} \qquad y_{P(1)} \qquad y_{P(2)} \qquad \cdots \qquad y_{P(C_{subblock}^{CC}-1)}$$

$$y_{P(0)+C_{subblock}^{CC}} \qquad y_{P(1)+C_{subblock}^{CC}} \qquad y_{P(2)+C_{subblock}^{CC}} \qquad \cdots \qquad y_{P(C_{subblock}^{CC}-1)+C_{subblock}^{CC}}$$

$$\vdots \qquad\qquad \vdots \qquad\qquad \vdots \qquad\qquad \ddots \qquad\qquad \vdots$$

$$y_{P(0)+(R_{subblock}^{CC}-1)\times C_{subblock}^{CC}} \quad y_{P(1)+(R_{subblock}^{CC}-1)\times C_{subblock}^{CC}} \quad y_{P(2)+(R_{subblock}^{CC}-1)\times C_{subblock}^{CC}} \quad \cdots \quad y_{P(C_{subblock}^{CC}-1)+(R_{subblock}^{CC}-1)\times C_{subblock}^{CC}}$$

(5) The output of the block interleaver is the bit sequence read out column by column from the inter-column permuted $\left(R_{subblock}^{CC} \times C_{subblock}^{CC}\right)$ matrix. The bits after sub-block interleaving are denoted by $v_0^{(i)}, v_1^{(i)}, v_2^{(i)}, ..., v_{K_\Pi-1}^{(i)}$, where $v_0^{(i)}$ corresponds to $y_{P(0)}$, $v_1^{(i)}$ to $y_{P(0)+C_{subblock}^{CC}}$ ... and $K_\Pi = \left(R_{subblock}^{CC} \times C_{subblock}^{CC}\right)$

**Table 5.1.4-2 Inter-column permutation pattern for sub-block interleaver.**

| Number of columns $C_{subblock}^{CC}$ | Inter-column permutation pattern $< P(0), P(1),..., P(C_{subblock}^{CC}-1) >$ |
|---|---|
| 32 | < 1, 17, 9, 25, 5, 21, 13, 29, 3, 19, 11, 27, 7, 23, 15, 31, 0, 16, 8, 24, 4, 20, 12, 28, 2, 18, 10, 26, 6, 22, 14, 30 > |

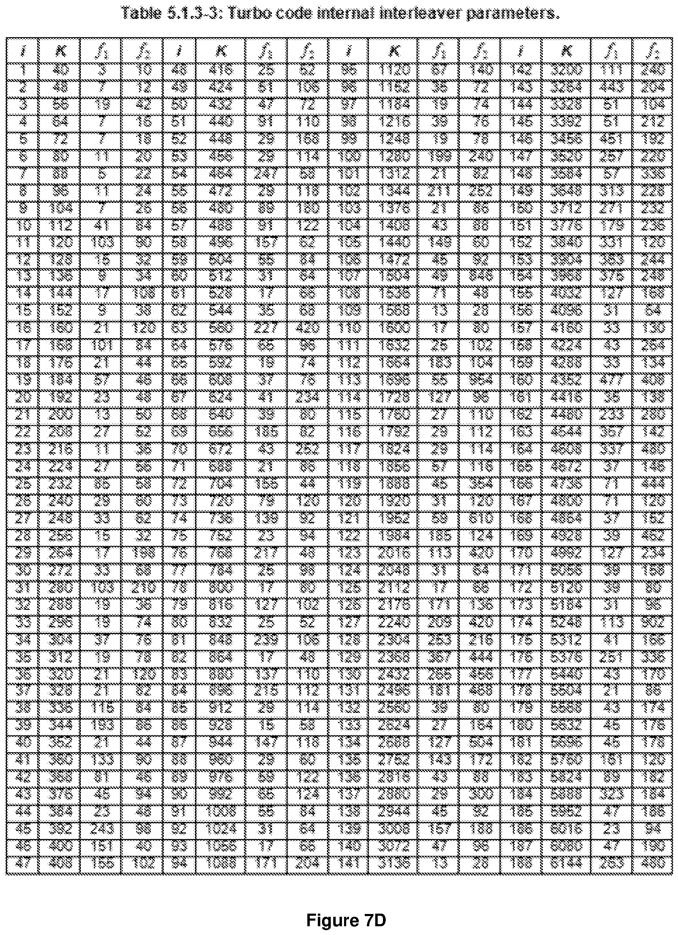

In another example, the turbo code internal interleaver defined in section 5.1.3.2.3 of 3GPP TS 36.212 is used instead. Specifically, the bits input to the turbo code internal interleaver are denoted by $c_0, c_1, ..., c_{K-1}$, where $K$ is the number of input bits. The bits output from the turbo code internal interleaver are denoted by $c_0', c_1', ..., c_{K-1}'$. The relationship between the input and output bits is as follows: $c_i' = c_{\Pi(i)}$, $i$=0, 1,...,(K-1) where the relationship between the output index $i$ and the input index $\Pi(i)$ satisfies the quadratic form: $\Pi(i) = (f_1 \cdot i + f_2 \cdot i^2)$mod $K$. The parameters $f_1$ and $f_2$ depend on the block size $K$ and are summarized in Table 5.1.3-3 shown in Figure 7D.

Other examples use a Quadratic Permutation Polynomial (QPP) interleaver with different constants, a simple rectangular interleaver, or an m-sequence based interleaver.

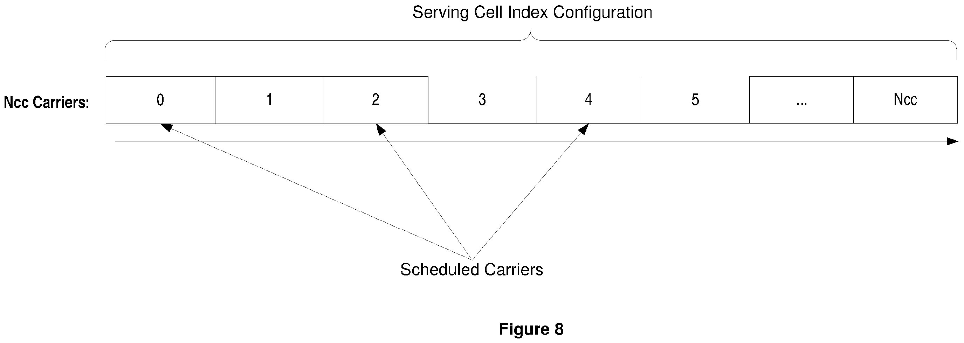

Alternatively, downlink carriers occurring consecutively in the frequency domain have consecutively ordered indexes in the serving cell index configuration. The base station in this regard may configure the serving cell indices so that consecutive carriers in the frequency domain have consecutive cell indices. But, as shown in Figure 8, the base station 20 schedules selected ones of the downlink carriers non-consecutively in terms of the indexes such that at least some successively scheduled downlink carriers have non-consecutively ordered indexes. The base station 20 may do so by randomly selecting which carrier to schedule, by applying an interleaver to the serving cell index configuration, or the like. If done by applying an interleaver, any number of possible types of interleavers may be used, including for instance the BRO interleaver, the sub-block interleaver defined in section 5.1.4.2.1 of 3GPP TS 36.212 and described above, the turbo code internal interleaver defined in section 5.1.3.2.3 of 3GPP TS 36.212 and described above, a quadratic polynomial permutation (QPP) interleaver with different constants, a simple rectangular interleaver, or an m-sequence based interleaver. Regardless, the device 16 forms the one or more information words by concatenating UCI for the carriers in order of the indexes.

In a different example of such an embodiment, shown in Figure 8, the base station 20 may schedule the carriers by jumping around the indexes rather than scheduling the indexes in order. For example, when the base station 20 activates and/or schedules the carriers, the base station 20 may apply a jumping pattern or interleaved pattern for activation and/or scheduling. For instance, the base station 20 may activate/schedule carriers of serving cell index 0, 2, 4, 6... or may activate/schedule carriers of serving cell index 1, 3, 5, 7,...The device 16 on the other hand forms the UCI information word(s) by concatenating UCI for the carriers in index order of 0, 1, 2, 3 so as to intersperse UCI for scheduled carriers with UCI for non-scheduled carriers.

No matter the particular implementation, though, accomplishing interspersion via the serving cell index configuration advantageously provides flexibility to the base station. Moreover, this approach requires no specification changes.

In still other embodiments, the device 16 intersperses the BS-known UCI with the BS-unknown UCI by performing code rate matching. For example, the device 16 may perform code rate matching after channel encoding by puncturing the one or more codewords. In this case, interspersing may be accomplished by interspersing the uplink control information known by the base station 20 in dependence on that puncturing, such that the uplink control information known by the base station 20 will be punctured more than uplink control information not known by the base station 20.

Consider for instance embodiments where output bits from an convolutional encoder (e.g., in LTE Rel-8) are interleaved and then put into a circular buffer. Bits are then taken from this circular buffer to produce a code word of any desired length. One embodiment exploits the fact that due to the rate matching performed after convolutional encoding of the information bits, not all input bits directly generate the same number of output bits in the codeword. Therefore the interleavers in embodiments above, and/or the choice of serving cell indices can be tailored to the circular buffer rate-matching to ensure that punctured coded bits correspond to transitions with known information bits. For example, if the code rate has been chosen so that coded bits corresponding to odd-numbered transition in the decoding trellis are punctured more often than even-numbered transitions, then the serving cell index configuration in Figure 7C can be used when scheduling the first half of the carriers. If scheduling the second half of the carriers is deemed more likely, then the reverse of the Figure 7C configuration, i.e. [7 3 5 1 6 2 4 0], can be used instead. This method can be applied to any of the embodiments above.

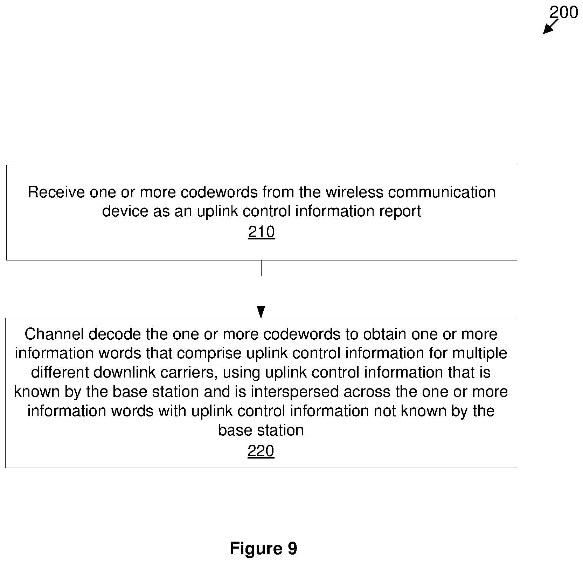

Figure 9 illustrates a corresponding method 200 performed by the base station 20 in view of the above for decoding uplink control information received from a wireless communication device 16 for multiple different downlink carriers. As shown, the method 200 includes receiving one or more codewords from the wireless communication device as an uplink control information report (Block 210). The method 200 also includes channel decoding the one or more codewords to obtain one or more information words that comprise uplink control information for multiple different downlink carriers, using uplink control information that is known by the base station and is interspersed across the one or more information words with uplink control information not known by the base station (Block 220).

In at least some embodiments, for example, decoding at the base station 20 involves biasing any branch metrics of a decoding trellis that correspond to uplink control information known by the base station 20. Such biasing effectively assists decoding of UCI not known by the base station.

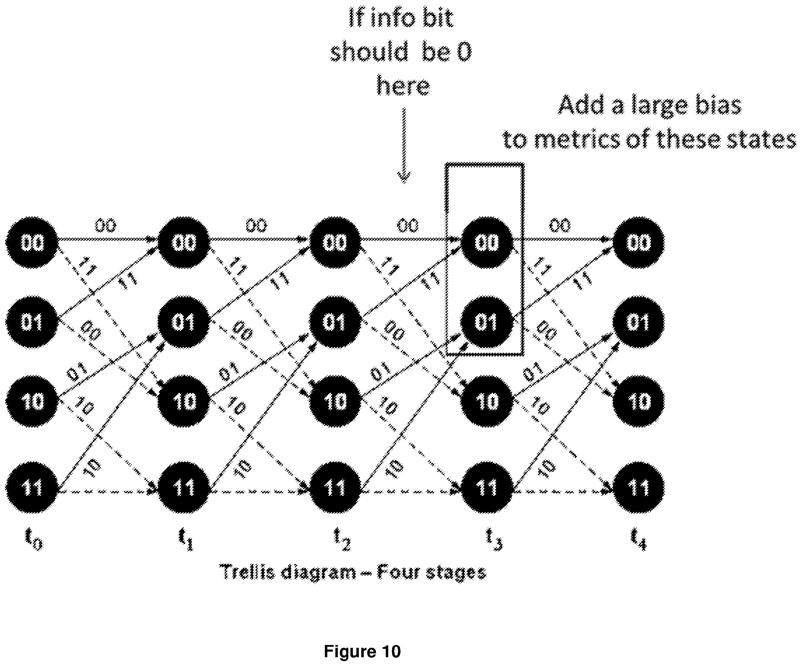

Consider for instance embodiments where the UCI is encoded with a convolutional code, such as a tail-biting convolutional code. A convolutional code is decoded using a trellis. Each state in the trellis corresponds to a certain content of the linear shift register used in the encoder, and each stage corresponds to a certain information bit being fed in to the encoder. This information bit gives rise to an output sequence from the encoder and the linear shift register is then updated to a new (or possibly the same) state. Each arrow in Figure 10 corresponds to such a transition.

To decode, the probability of each transition given the observed received codeword is calculated, and its log likelihood ratio (LLR) is associated with the corresponding transition in the trellis. Then the most likely information bit sequence is determined using an algorithm such as the Viterbi algorithm. If the values of some of the information bits are known at the decoder, then this can be utilized by adding a bias to the corresponding state transitions in the trellis, as shown in the example of Figure 10. Indeed, if some of the inputs are known, this means that not all transitions in the trellis are possible for that stage. The algorithm to determine the most likely information bit sequence may be modified (e.g., from conventional approaches) to take this into account, by adding a large bias to the branch metrics of the possible transitions, thereby ensuring that no impossible transitions are chosen.

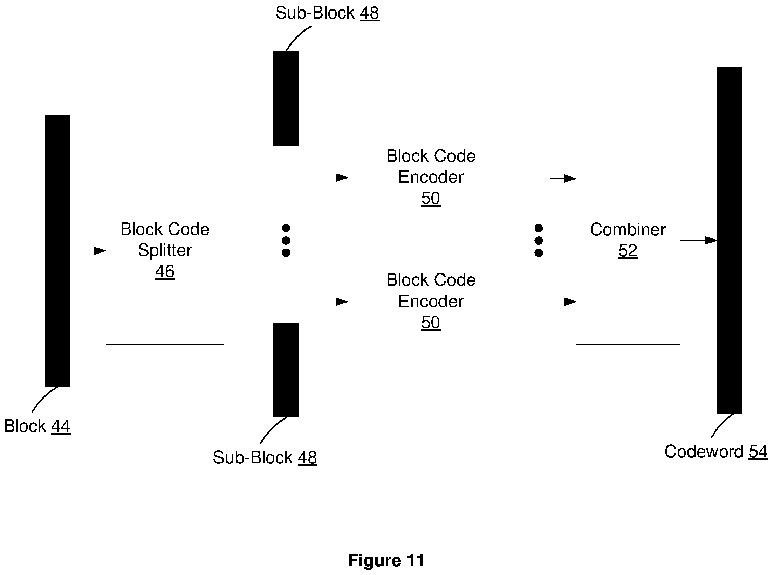

In alternative embodiments, though, the UCI may be encoded with a parallel block code. A parallel block code is a code where a block of input bits are split into sub-blocks, each of which is then encoded separately before being combined again into one codeword. Figure 11 for example shows that a block code splitter 46 splits a block 44 of UCI bits into $M$ sub-blocks 48. Respective block code encoders 50 then separately encode those sub-blocks, whereupon the encoded sub-blocks are combined by a combiner 52 into one codeword 54. In at least some of these embodiments, the device intersperses BS-known UCI across multiple different information words in the form of different sub-blocks. Even if BS-known UCI is not interspersed across any single sub-block, the BS-known UCI nonetheless remains interspersed across the multiple sub-blocks that collectively form the final codeword. Alternatively or additionally, the device intersperses BS-known UCI with BS-unknown UCI across even a single sub-block. One example of a parallel block code is the code used in in section 5.2.2.6.5 of 3GPP TS 36.212. According to this coding approach, the HARQ-ACK bits input to the channel coding block are denoted by $o_0^{ACK} \; o_1^{ACK} \,, ..., o_{O^{ACK}-1}^{ACK}$ where $11 < O^{ACK} \le 21$ is the number of bits.

The sequences of bits $o_0^{ACK}, o_1^{ACK}, o_2^{ACK}, ..., o_{\lceil O^{ACK}/2 \rceil - 1}^{ACK}$ and $o_{\lceil O^{ACK}/2 \rceil}^{ACK}, o_{\lceil O^{ACK}/2 \rceil + 1}^{ACK}, o_{\lceil O^{ACK}/2 \rceil + 2}^{ACK}, ..., o_{O^{ACK}-1}^{ACK}$ are encoded as follows

$$\tilde{q}_i = \sum_{n=0}^{\lceil O^{ACK}/2 \rceil - 1} \left( o_n^{ACK} \cdot M_{i,n} \right) \bmod 2$$

and

$$\widetilde{\widetilde{q}}_i = \sum_{n=0}^{O^{ACK}-\left\lceil O^{ACK}/2 \right\rceil - 1} \left( o^{ACK}_{\left\lceil O^{ACK}/2 \right\rceil + n} \cdot M_{i,n} \right) \bmod 2$$

where $i$ = 0, 1, 2, ..., 31 and the basis sequences $M_{i,n}$ are defined in Table 5.2.2.6.4-1 of 3GPP TS 36.212. The output bit sequence $q_0^{ACK}, q_1^{ACK}, q_2^{ACK}, ..., q_{Q_{ACK}-1}^{ACK}$ is obtained by the concatenation and circular repetition of the bit sequences $\widetilde{q}_0, \widetilde{q}_1, \widetilde{q}_2, ..., \widetilde{q}_{31}$ and $\widetilde{\widetilde{q}}_0, \widetilde{\widetilde{q}}_1, \widetilde{\widetilde{q}}_2, ..., \widetilde{\widetilde{q}}_{31}$ as follows:

Set $i$ = 0

while $i < \left\lceil Q'/2 \right\rceil \cdot Q_m$

$$q_i^{ACK} = \widetilde{q}_{i \bmod 32}$$

$i$ = $i$ + 1

end while

Set $i$ = 0

while $i < \left( Q' - \left\lceil Q'/2 \right\rceil \right) \cdot Q_m$

$$q_{\left\lceil Q'/2 \right\rceil \cdot Q_m + i}^{ACK} = \widetilde{\widetilde{q}}_{i \bmod 32}$$

$i$ = $i$ + 1

end while

end while

Note that approaches herein are particularly applicable to an LTE context in some embodiments, In LTE Rel-13, for example, a maximum 32 downlink carriers can be configured for one UE and hence a new PUCCH format will be introduced. For HARQ-ACK feedback, the slow codebook adaptation as in Rel-10 can be applied, i.e., the HARQ-ACK bits are for the configured carriers. Hence, there can be a situation where only a few carriers are scheduled and a large number of carriers are configured which means that there are many redundant bits in HARQ-ACK feedback. An eNB can apply smart decoding with the knowledge of which configured carriers are not scheduled and HARQ-ACK bits are NACK(s) for these carriers. This approach could achieve comparable performance as fast codebook adaptation. However, when the number of configured carriers is large and correspondingly the number of HARQ-ACK bits is large, smart decoding heretofore may not achieve a satisfying performance.

In a naive implementation of a codebook which reports HARQ-ACKS of all configured carriers, the information bits would be organized so that HARQ-ACKS of the scheduled CCs occur in the beginning of the information word, while the NACKs of the unscheduled CCS are reported at the end. This gives rise to a suboptimal link performance, both in PUCCH format 3 as defined in LTE Rel-10, and in a proposed new PUSCH-like PUCCH format using convolutional codes.

One or more embodiments herein provide methods of carrier configuration, activation and scheduling for carrier aggregation. The embodiments also provide alternative methods for HARQ-ACK feedback design. In some embodiments, an objective is to improve the performance of smart decoding, especially for HARQ-ACK of large payload due to a number of configured carriers.

With the proposed methods, the link performance of smart decoding can in fact be improved. And for a larger number of configured carriers, the performance of slow codebook adaptation can be comparable to the fast codebook adaptation. In particular, with proposed carrier configuration and scheduling, when a UE reports HARQ-ACK for carrier aggregation, the HARQ-ACK bits for configured but not scheduled carriers (i.e., know NACK(s) for these carriers) may be spread in the HARQ-ACK information bits. Alternatively, the spreading may be done by an interleaver before the encoder. This enables a better decoding performance at the eNB when using smart decoding.

The methods described herein may be applied for both legacy PUCCH formats (e.g. PUCCH format 3) and the new PUCCH format(s) designed to support a large number of HARQ-ACK bits. The methods can also be applied when HARQ-ACK bits are transmitted on PUSCH.

Of course, although at least some embodiments herein are exemplified in the context of LTE, embodiments herein are not limited to that context. To this point, although the acronym "UCI" has been used to conveniently refer to uplink control information, the uplink control information herein is not limited to "UCI" as often referred to in an LTE context.

Although the above embodiments were described with respect to UCI, the embodiments may also apply to downlink control information in an analogous manner between the base station and the device.

A radio node herein is any type of node (e.g., a base station or wireless communication device) capable of communicating with another node over radio signals. A radio network node is any type of radio node within a wireless communication network, such as a base station. A wireless communication device is any type of radio node capable of communicating with a radio network node over radio signals. A wireless communication device may therefore refer to a machine-to-machine (M2M) device, a machine-type communications (MTC) device, a NB-loT device, etc. The wireless device may also be a user equipment (UE), however it should be noted that the UE does not necessarily have a "user" in the sense of an individual person owning and/or operating the device. A wireless device may also be referred to as a radio device, a radio communication device, a wireless terminal, or simply a terminal - unless the context indicates otherwise, the use of any of these terms is intended to include device-to-device UEs or devices, machine-type devices or devices capable of machine-to-machine communication, sensors equipped with a wireless device, wireless-enabled table computers, mobile terminals, smart phones, laptop-embedded equipped (LEE), laptop-mounted equipment (LME), USB dongles, wireless customer-premises equipment (CPE), etc. In the discussion herein, the terms machine-to-machine (M2M) device, machine-type communication (MTC) device, wireless sensor, and sensor may also be used. It should be understood that these devices may be UEs, but are generally configured to transmit and/or receive data without direct human interaction.

In an IOT scenario, a wireless communication device as described herein may be, or may be comprised in, a machine or device that performs monitoring or measurements, and transmits the results of such monitoring measurements to another device or a network. Particular examples of such machines are power meters, industrial machinery, or home or personal appliances, e.g. refrigerators, televisions, personal wearables such as watches etc. In other scenarios, a wireless communication device as described herein may be comprised in a vehicle and may perform monitoring and/or reporting of the vehicle's operational status or other functions associated with the vehicle.

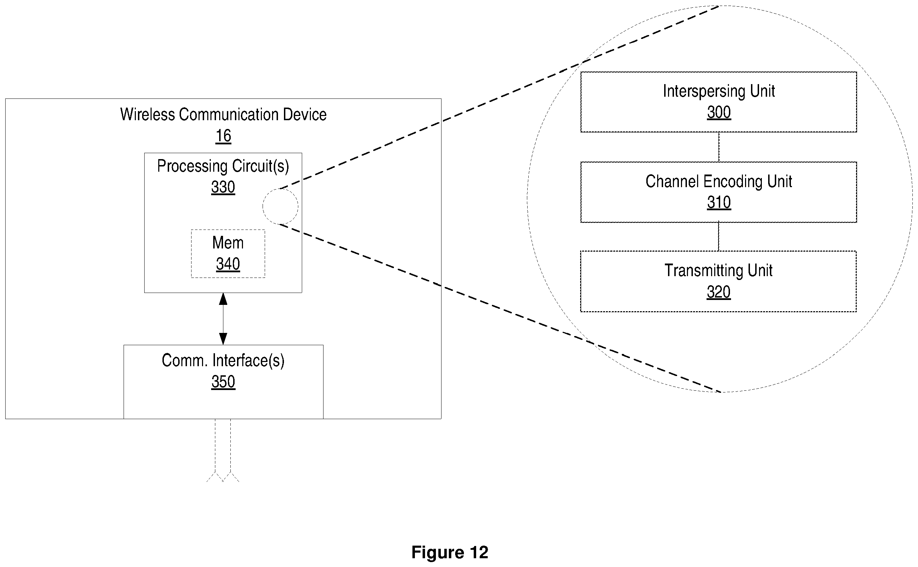

With the above modifications and variations in mind, Figure 12 illustrates additional details of the wireless communication device 16 according to one or more embodiments. The device 16 is configured, e.g., via functional means or units, to implement the processing in Figure 3.

The device 16 in some embodiments for example includes a interspersing means or unit 300, a channel encoding means or unit 310, and a transmitting means or unit 320 for performing Figure 3's processing. In particular, the interspersing means or unit 300 is for interspersing uplink control information known by the base station 20 with uplink control information not known by the base station 20 across one or more information words that comprise uplink control information for multiple different downlink carriers. The channel encoding means or unit 310 is for channel encoding the one or more information words to obtain one or more codewords. And the transmitting means or unit 320 is for transmitting the one or more codewords to the base station 20 as an uplink control information report.

In at least some embodiments, the device 16 comprises one or more processing circuits 330 configured to implement the above processing, such as by implementing functional means or units 300, 310, and/or 320. In one embodiment, for example, the processing circuit(s) 330 implement functional means or units as respective circuits. The circuits in this regard may comprise circuits dedicated to performing certain functional processing and/or one or more microprocessors in conjunction with memory. In embodiments that employ memory 340, which may comprise one or several types of memory such as read-only memory (ROM), random-access memory, cache memory, flash memory devices, optical storage devices, etc., the memory stores program code that, when executed by the one or more for carrying out one or more microprocessors, carries out the techniques described herein.

In one or more embodiments, the device 16 also comprises one or more communication interfaces 350. The one or more communication interfaces 350 include various components (not shown) for sending and receiving data and control signals. More particularly, the interface(s) 350 include a transmitter that is configured to use known signal processing techniques, typically according to one or more standards, and is configured to condition a signal for transmission (e.g., over the air via one or more antennas). Similarly, the interface(s) 350 include a receiver that is configured to convert signals received (e.g., via the antenna(s)) into digital samples for processing by the one or more processing circuits.

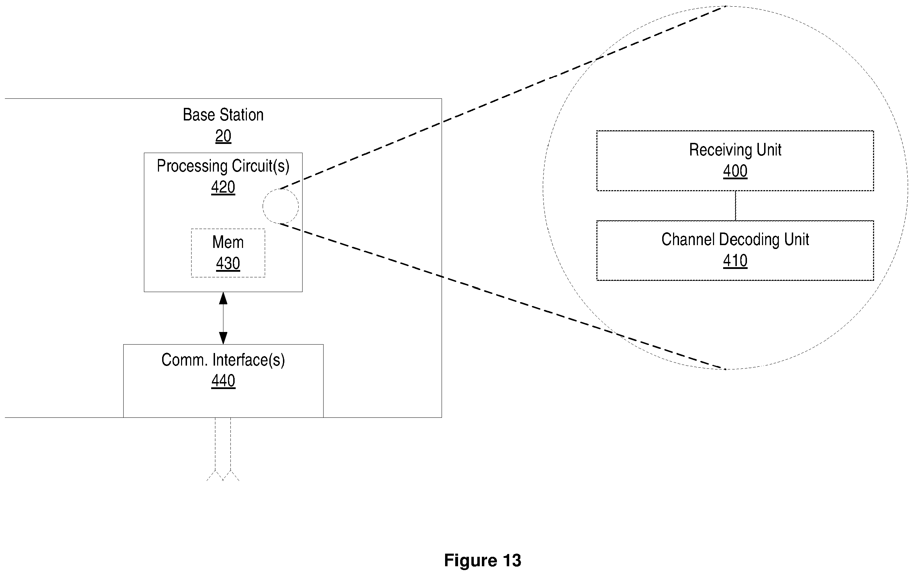

Figure 13 illustrates additional details of the base station 20 according to one or more embodiments. The base station 20 is configured, e.g., via functional means or units, to implement the processing in Figure 9.

The base station 20 in some embodiments for example includes a receiving means or unit 400 and a channel decoding means or unit 410 for performing the processing in Figure 9. In particular, the receiving means or unit 400 is for receiving one or more codewords from the wireless communication device as an uplink control information report. The channel decoding means or unit 410 is for channel decoding the one or more codewords to obtain one or more information words that comprise uplink control information for multiple different downlink carriers, using uplink control information that is known by the base station 20 and is interspersed across the one or more information words with uplink control information not known by the base station 20.

In at least some embodiments, the base station 20 comprises one or more processing circuits 420 configured to implement the above processing, such as by implementing functional means or units 400 and/or 410. In one embodiment, for example, the processing circuit(s) 420 implement functional means or units as respective circuits. The circuits in this regard may comprise circuits dedicated to performing certain functional processing and/or one or more microprocessors in conjunction with memory. In embodiments that employ memory 430, which may comprise one or several types of memory such as read-only memory (ROM), random-access memory, cache memory, flash memory devices, optical storage devices, etc., the memory stores program code that, when executed by the one or more for carrying out one or more microprocessors, carries out the techniques described herein.

In one or more embodiments, the base station 20 also comprises one or more communication interfaces 440. The one or more communication interfaces 440 include various components (not shown) for sending and receiving data and control signals. More particularly, the interface(s) include a transmitter that is configured to use known signal processing techniques, typically according to one or more standards, and is configured to condition a signal for transmission (e.g., over the air via one or more antennas). Similarly, the interface(s) 440 include a receiver that is configured to convert signals received (e.g., via the antenna(s)) into digital samples for processing by the one or more processing circuits.

**Claims**

1. A method (100) implemented by a wireless communication device (16) for signaling uplink control information for multiple different downlink carriers to a base station (20) in a wireless communication system (10), comprising:

   interspersing (110) uplink control information known by the base station (20) with uplink control information not known by the base station (20) across one or more information words that comprise uplink control information for multiple different downlink carriers;
   channel encoding (120) the one or more information words to obtain one or more codewords; and
   transmitting (130) the one or more codewords to the base station (20) as an uplink control information report, wherein the uplink control information known by the base station (20) comprises uplink control information for one or more non-scheduled downlink carriers, and wherein the uplink control information not known by the base station (20) comprises uplink control information for one or more scheduled downlink carriers, and
   wherein the one or more information words comprise uplink control information for multiple different downlink carriers that are configured, and wherein one or more of the configured downlink carriers are scheduled and one or more of the configured downlink carriers are non-scheduled.

2. The method of claim 1, further comprising adapting a codebook used to perform said channel encoding based on how many different downlink carriers are configured, irrespective of how many of the configured downlink carriers are scheduled.

3. The method of claim 1, further comprising adapting a codebook used to perform said channel encoding based on how many different downlink carriers are activated, irrespective of how many of the activated downlink carriers are scheduled.

4. The method of any of claims 1-3, further comprising adding an error detecting code to the uplink control information prior to said interspersing.

5. The method of any of claims 1-4, wherein said interspersing comprises interleaving uplink control information for a given one of the downlink carriers with uplink control information for one or more others of the downlink carriers.

6. The method of any of claims 1-5, wherein said interspersing comprises applying the uplink control information for the multiple different downlink carriers to an interleaver prior to said channel encoding.

7. The method of claim 6, wherein the interleaver is a bit reverse order interleaver or a rectangular interleaver.

8. The method of any of claims 1-4, further comprising receiving a serving cell index configuration from the base station (20) indicating indexes for the different downlink carriers, wherein at least some of the different downlink carriers occur consecutively in the frequency domain but have non-consecutively ordered indexes, and wherein said interspersing comprises forming the one or more information words by concatenating uplink control information for the downlink carriers in order of said indexes.

9. The method of any of claims 1-4, further comprising receiving a serving cell index configuration from the base station (20) indicating indexes for the different downlink carriers, wherein downlink carriers occurring consecutively in the frequency domain have consecutively ordered indexes, wherein at least some of the different downlink carriers are scheduled non-consecutively in terms of said indexes such that at least some successively scheduled downlink carriers have non-consecutively ordered indexes, and wherein said interspersing comprises forming the one or more information words by concatenating uplink control information for the downlink carriers in order of said indexes.

10. The method of any of claims 1-9, further comprising performing code rate matching after said channel encoding by puncturing the one or more codewords, and wherein said interspersing comprises interspersing the uplink control information known by the base station (20) in dependence on said puncturing, such that the uplink control information known by the base station (20) will be punctured more than uplink control information not known by the base station (20).

11. A method implemented by a base station (20) for decoding uplink control information received from a wireless communication device (16) for multiple different downlink carriers, comprising:

   receiving (210) one or more codewords from the wireless communication device (16) as an uplink control information report; and
   channel decoding (220) the one or more codewords to obtain one or more information words that comprise uplink control information for multiple different downlink carriers, using uplink control information that is known by the base station (20) and is interspersed across the one or more information words with uplink control information not known by the base station (20),
   wherein the uplink control information known by the base station (20) comprises uplink control information for one or more non-scheduled downlink carriers, and wherein the uplink control information not known by the base station (20) comprises uplink control information for one or more scheduled downlink carriers, and
   wherein the one or more information words comprise uplink control information for multiple different downlink carriers that are configured, and wherein one or more of the configured downlink carriers are scheduled and one or more of the configured downlink carriers are non-scheduled.

12. The method of claim 11, further comprising adapting a codebook used to perform said channel decoding based on how many different downlink carriers are configured, irrespective of how many of the configured downlink carriers are scheduled.

13. The method of claim 11, further comprising adapting a codebook used to perform said channel decoding based on how many different downlink carriers are activated, irrespective of how many of the configured downlink carriers are scheduled.

14. A wireless communication device (16) configured to signal uplink control information for multiple different downlink carriers to a base station (20) in a wireless communication system (10), wherein the wireless communication device (16) is configured to:

   intersperse uplink control information known by the base station (20) with uplink control information not known by the base station (20) across one or more information words that comprise uplink control information for multiple different downlink carriers;
   channel encode the one or more information words to obtain one or more codewords; and
   transmit the one or more codewords to the base station (20) as an uplink control information report.
   wherein the uplink control information known by the base station (20) comprises uplink control information for one or more non-scheduled downlink carriers, and wherein the uplink control information not known by the base station (20) comprises uplink control information for one or more scheduled downlink carriers, and
   wherein the one or more information words comprise uplink control information for multiple different downlink carriers that are configured, and wherein one or more of the configured downlink carriers are scheduled and one or more of the configured downlink carriers are non-scheduled.

**15.** A base station (20) configured to decode uplink control information received from a wireless communication device (16) for multiple different downlink carriers, wherein the base station (20) is configured to:

receive one or more codewords from the wireless communication device (16) as an uplink control information report; and

channel decode the one or more codewords to obtain one or more information words that comprise uplink control information for multiple different downlink carriers, using uplink control information that is known by the base station (20) and is interspersed across the one or more information words with uplink control information not known by the base station (20),

wherein the uplink control information known by the base station (20) comprises uplink control information for one or more non-scheduled downlink carriers, and wherein the uplink control information not known by the base station (20) comprises uplink control information for one or more scheduled downlink carriers, and

wherein the one or more information words comprise uplink control information for multiple different downlink carriers that are configured, and wherein one or more of the configured downlink carriers are scheduled and one or more of the configured downlink carriers are non-scheduled.

**Patentansprüche**

**1.** Verfahren (100), das durch eine Drahtloskommunikationsvorrichtung (16) zum Signalisieren von Uplink-Steuerinformationen für mehrere unterschiedliche Downlink-Träger zu einer Basisstation (20) in einem Drahtloskommunikationssystem (10) implementiert ist, umfassend:

Einstreuen (110) von Uplink-Steuerinformationen, die durch die Basisstation (20) bekannt sind, mit Uplink-Steuerinformationen, die durch die Basisstation (20) nicht bekannt sind, über ein oder mehrere Informationswörter, die Uplink-Steuerinformationen für mehrere unterschiedliche Downlink-Träger umfassen;

Kanalkodieren (120) des einen oder der mehreren Informationswörter, um ein oder mehrere Codewörter zu erhalten; und

Übertragen (130) des einen oder der mehreren Codewörter an die Basisstation (20) als einen Uplink-Steuerinformationsbericht,

wobei die Uplink-Steuerinformationen, die durch die Basisstation (20) bekannt sind, Uplink-Steuerinformationen für einen oder mehrere nicht vorgesehene Downlink-Träger umfassen, und wobei die Uplink-Steuerinformationen, die durch die Basisstation (20) nicht bekannt sind, Uplink-Steuerinformationen für einen oder mehrere vorgesehene Downlink-Träger umfassen, und

wobei das eine oder die mehreren Informationswörter Uplink-Steuerinformationen für mehrere unterschiedliche Downlink-Träger umfassen, die konfiguriert sind, und wobei einer oder mehrere der konfigurierten Downlink-Träger vorgesehen sind und ein oder mehrere der konfigurierten Downlink-Träger nicht vorgesehen sind.

**2.** Verfahren nach Anspruch 1, ferner umfassend das Anpassen eines Codebuchs, das verwendet wird, um das Kanalkodieren basierend darauf durchzuführen, wie viele unterschiedliche Downlink-Träger konfiguriert sind, unabhängig davon, wie viele der konfigurierten Downlink-Träger vorgesehen sind.

**3.** Verfahren nach Anspruch 1, ferner umfassend das Anpassen eines Codebuchs, das verwendet wird, um das Kanalkodieren basierend darauf durchzuführen, wie viele unterschiedliche Downlink-Träger aktiviert sind, unabhängig davon, wie viele der aktivierten Downlink-Träger vorgesehen sind.

**4.** Verfahren nach einem der Ansprüche 1-3, ferner umfassend das Zugeben eines Fehlererfassungscodes zu den Uplink-Steuerinformationen vor dem Einstreuen.

**5.** Verfahren nach einem der Ansprüche 1-4, wobei das Einstreuen das Verschachteln von Uplink-Steuerinformationen für einen vorgegebenen der Downlink-Träger mit Uplink-Steuerinformationen für einen oder mehrere andere der Downlink-Träger umfasst.

**6.** Verfahren nach einem der Ansprüche 1-5, wobei das Einstreuen das Anwenden der Uplink-Steuerinformationen für die mehreren unterschiedlichen Downlink-Träger bei einem Verschachteler vor dem Kanalkodieren umfasst.

**7.** Verfahren nach Anspruch 6, wobei der Verschachteler ein Verschachteler mit umgekehrter Bitfolge oder ein rechteckiger Verschachteler ist.

8. Verfahren nach einem der Ansprüche 1-4, ferner umfassend das Empfangen einer Indexkonfiguration einer bedienenden Zelle von der Basisstation (20), die Indizes für die unterschiedlichen Downlink-Träger angibt, wobei mindestens manche der unterschiedlichen Downlink-Täger nacheinander in der Frequenzdomäne auftreten, aber nicht-nacheinander geordnete Indizes haben, und wobei das Einstreuen das Bilden des einen oder der mehreren Informationswörter durch Verknüpfen von Uplink-Steuerinformationen für die Downlink-Träger in der Reihenfolge der Indizes umfasst.

9. Verfahren nach einem der Ansprüche 1-4, ferner umfassend das Empfangen einer Indexkonfiguration einer bedienenden Zelle von der Basisstation (20), die Indizes für die unterschiedlichen Downlink-Träger angibt, wobei Downlink-Träger, die nacheinander in der Frequenzdomäne auftreten, nacheinander geordnete Indizes haben, wobei mindestens manche der unterschiedlichen Downlink-Täger nicht nacheinander hinsichtlich der Indizes vorgesehen sind, sodass mindestens manche nacheinander vorgesehene Downlink-Träger nicht nacheinander geordnete Indizes haben, und wobei das Einstreuen das Bilden des einen oder der mehreren Informationswörter durch Verknüpfen von Uplink-Steuerinformationen für die Downlink-Träger in der Reihenfolge der Indizes umfasst.

10. Verfahren nach einem der Ansprüche 1-9, ferner umfassend das Durchführen von Coderatenanpassung nach dem Kanalkodieren durch Punktieren des einen oder der mehreren Codewörter, und wobei das Einstreuen das Einstreuen der Uplink-Steuerinformationen umfasst, die durch die Basisstation (20) bekannt sind, in Abhängigkeit von dem Punktieren, sodass die Uplink-Steuerinformationen, die durch die Basisstation (20) bekannt sind, mehr als die Uplink-Informationen punktiert werden, die durch die Basisstation (20) nicht bekannt sind.

11. Verfahren, das durch eine Basisstation (20) zum Dekodieren von Uplink-Steuerinformationen implementiert ist, die von einer Drahtloskommunikationsvorrichtung (16) für mehrere unterschiedliche Downlink-Träger empfangen werden, umfassend:

Empfangen (210) des einen oder der mehreren Codewörter von der Drahtloskommunikationsvorrichtung (16) als einen Uplink-Steuerinformationsbericht; und
Kanaldekodieren (220) des einen oder der mehreren Informationswörter, um ein oder mehrere Informationswörter zu erhalten, die Uplink-Steuerinformationen für mehrere unterschiedliche Downlink-Träger umfassen, unter Verwendung von Uplink-Steuerinformationen, die durch die Basisstation (20) bekannt sind und die über das eine oder die mehreren Informationswörter eingestreut sind, mit Uplink-Steuerinformationen, die durch die Basisstation (20) nicht bekannt sind,
wobei die Uplink-Steuerinformationen, die durch die Basisstation (20) bekannt sind, Uplink-Steuerinformationen für einen oder mehrere nicht vorgesehene Downlink-Träger umfassen, und wobei die Uplink-Steuerinformationen, die durch die Basisstation (20) nicht bekannt sind, Uplink-Steuerinformationen für einen oder mehrere vorgesehene Downlink-Träger umfassen, und
wobei das eine oder die mehreren Informationswörter Uplink-Steuerinformationen für mehrere unterschiedliche Downlink-Träger umfassen, die konfiguriert sind, und wobei einer oder mehrere der konfigurierten Downlink-Träger vorgesehen sind und ein oder mehrere der konfigurierten Downlink-Träger nicht vorgesehen sind.

12. Verfahren nach Anspruch 11, ferner umfassend das Anpassen eines Codebuchs, das verwendet wird, um das Kanaldekodieren basierend darauf durchzuführen, wie viele unterschiedliche Downlink-Träger konfiguriert sind, unabhängig davon, wie viele der konfigurierten Downlink-Träger vorgesehen sind.

13. Verfahren nach Anspruch 11, ferner umfassend das Anpassen eines Codebuchs, das verwendet wird, um das Kanaldekodieren basierend darauf durchzuführen, wie viele unterschiedliche Downlink-Träger aktiviert sind, unabhängig davon, wie viele der konfigurierten Downlink-Träger vorgesehen sind.

14. Drahtloskommunikationsvorrichtung (16), die konfiguriert ist, um Uplink-Steuerinformationen für mehrere unterschiedliche Downlink-Träger zu einer Basisstation (20) in einem Drahtloskommunikationssystem (10) zu signalisieren, wobei die Drahtloskommunikationsvorrichtung (16) für Folgendes konfiguriert ist:

Einstreuen von Uplink-Steuerinformationen, die durch die Basisstation (20) bekannt sind, mit Uplink-Steuerinformationen, die durch die Basisstation (20) nicht bekannt sind, über ein oder mehrere Informationswörter, die Uplink-Steuerinformationen für mehrere unterschiedliche Downlink-Träger umfassen;
Kanalkodieren des einen oder der mehreren Informationswörter, um ein oder mehrere Codewörter zu erhalten; und
Übertragen des einen oder der mehreren Codewörter an die Basisstation (20) als einen Uplink-Steuerinformationsbericht,

wobei die Uplink-Steuerinformationen, die durch die Basisstation (20) bekannt sind, Uplink-Steuerinformationen für einen oder mehrere nicht vorgesehene Downlink-Träger umfassen, und wobei die Uplink-Steuerinformationen, die durch die Basisstation (20) nicht bekannt sind, Uplink-Steuerinformationen für einen oder mehrere vorgesehene Downlink-Träger umfassen, und

wobei das eine oder die mehreren Informationswörter Uplink-Steuerinformationen für mehrere unterschiedliche Downlink-Träger umfassen, die konfiguriert sind, und wobei einer oder mehrere der konfigurierten Downlink-Träger vorgesehen sind und ein oder mehrere der konfigurierten Downlink-Träger nicht vorgesehen sind.

15. Basisstation (20), die konfiguriert ist, um Uplink-Steuerinformationen zu dekodieren, die von einer Drahtloskommunikationsvorrichtung (16) für mehrere unterschiedliche Downlink-Träger empfangen werden, wobei die Basisstation (20) für Folgendes konfiguriert ist:

Empfangen des einen oder der mehreren Codewörter von der Drahtloskommunikationsvorrichtung (16) als einen Uplink-Steuerinformationsbericht; und

Kanaldekodieren des einen oder der mehreren Codewörter, um ein oder mehrere Informationswörter zu erhalten, die Uplink-Steuerinformationen für mehrere unterschiedliche Downlink-Träger umfassen, unter Verwendung von Uplink-Steuerinformationen, die durch die Basisstation (20) bekannt sind und die über das eine oder die mehreren Informationswörter eingestreut sind, mit Uplink-Steuerinformationen, die durch die Basisstation (20) nicht bekannt sind,

wobei die Uplink-Steuerinformationen, die durch die Basisstation (20) bekannt sind, Uplink-Steuerinformationen für einen oder mehrere nicht vorgesehene Downlink-Träger umfassen, und wobei die Uplink-Steuerinformationen, die durch die Basisstation (20) nicht bekannt sind, Uplink-Steuerinformationen für einen oder mehrere vorgesehene Downlink-Träger umfassen, und

wobei das eine oder die mehreren Informationswörter Uplink-Steuerinformationen für mehrere unterschiedliche Downlink-Träger umfassen, die konfiguriert sind, und wobei einer oder mehrere der konfigurierten Downlink-Träger vorgesehen sind und ein oder mehrere der konfigurierten Downlink-Träger nicht vorgesehen sind.

## Revendications

1. Procédé (100) mis en œuvre par un dispositif de communication sans fil (16) pour signaler des informations de commande de liaison montante pour plusieurs porteuses de liaison descendante différentes à une station de base (20) dans un système de communication sans fil (10), comprenant :

l'intercalation (110) des informations de commande de liaison montante connues par la station de base (20) avec des informations de commande de liaison montante non connues par la station de base (20) dans un ou plusieurs mots d'information qui comprennent des informations de commande de liaison montante pour plusieurs porteuses de liaison descendante différentes ;

le codage de canal (120) de l'un ou plusieurs mots d'information pour obtenir un ou plusieurs mots de code ; et

la transmission (130) de l'un ou plusieurs mots de code à la station de base (20) en tant que rapport d'informations de commande de liaison montante,

dans lequel les informations de commande de liaison montante connues par la station de base (20) comprennent des informations de commande de liaison montante pour une ou plusieurs porteuses de liaison descendante non programmées, et dans lequel les informations de commande de liaison montante non connues par la station de base (20) comprennent des informations de commande de liaison montante pour une ou plusieurs porteuses de liaison descendante programmées, et

dans lequel l'un ou plusieurs mots d'information comprennent des informations de commande de liaison montante pour plusieurs porteuses de liaison descendante différentes qui sont configurées, et dans lequel une ou plusieurs des porteuses de liaison descendante configurées sont programmées et une ou plusieurs des porteuses de liaison descendante configurées ne sont pas programmées.

2. Procédé selon la revendication 1, comprenant en outre l'adaptation d'un livre de codes utilisé pour effectuer ledit codage de canal sur la base du nombre de porteuses de liaison descendante différentes configurées, quel que soit le nombre de porteuses de liaison descendante configurées qui sont programmées.

3. Procédé selon la revendication 1, comprenant en outre l'adaptation d'un livre de codes utilisé pour effectuer ledit codage de canal sur la base du nombre de porteuses de liaison descendante différentes activées, quel que soit le nombre de porteuses de liaison descendante activées qui sont programmées.

4. Procédé selon l'une quelconque des revendications 1 à 3, comprenant en outre l'ajout d'un code de détection d'erreur aux informations de commande de liaison montante avant ladite intercalation.

5. Procédé selon l'une quelconque des revendications 1 à 4, dans lequel ladite intercalation comprend l'entrelacement des informations de commande de liaison montante pour une des porteuses de liaison descendante donnée avec des informations de commande de liaison montante pour une ou plusieurs autres des porteuses de liaison descendante.

6. Procédé selon l'une quelconque des revendications 1 à 5, dans lequel ladite intercalation comprend l'application des informations de commande de liaison montante pour les multiples porteuses de liaison descendante différentes à un entrelaceur avant ledit codage de canal.

7. Procédé selon la revendication 6, dans lequel l'entrelaceur est un entrelaceur à ordre inverse de bits ou un entrelaceur rectangulaire.

8. Procédé selon l'une quelconque des revendications 1 à 4, comprenant en outre la réception d'une configuration d'index de cellule de desserte depuis la station de base (20) indiquant des index pour les différentes porteuses de liaison descendante, dans lequel au moins certaines des différentes porteuses de liaison descendante se produisent consécutivement dans le domaine fréquentiel mais ont des index ordonnés de manière non consécutive, et dans lequel ladite intercalation comprend la formation de l'un ou plusieurs mots d'information en concaténant les informations de commande de liaison montante pour les porteuses de liaison descendante dans l'ordre desdits index.

9. Procédé selon l'une quelconque des revendications 1 à 4, comprenant en outre la réception d'une configuration d'index de cellule de desserte depuis la station de base (20) indiquant des index pour les différentes porteuses de liaison descendante, dans lequel les porteuses de liaison descendante se produisant consécutivement dans le domaine fréquentiel ont des index ordonnés consécutivement, dans lequel au moins certaines des différentes porteuses de liaison descendante sont programmées de manière non consécutive en termes desdits index de sorte qu'au moins certaines porteuses de liaison descendante successivement programmées ont des index ordonnés de manière non consécutive, et dans lequel ladite intercalation comprend la formation de l'un ou plusieurs mots d'information en concaténant les informations de commande de liaison montante pour les porteuses de liaison descendante dans l'ordre desdits index.

10. Procédé selon l'une quelconque des revendications 1 à 9, comprenant en outre l'exécution d'une correspondance de débit de code après ledit codage de canal en perforant l'un ou plusieurs mots de code, et dans lequel ladite intercalation comprend l'intercalation des informations de commande de liaison montante connues par la station de base (20) en fonction de ladite perforation, de sorte que les informations de commande de liaison montante connues par la station de base (20) seront perforées plus que les informations de commande de liaison montante non connues par la station de base (20).

11. Procédé mis en œuvre par une station de base (20) pour décoder des informations de commande de liaison montante reçues depuis dispositif de communication sans fil (16) pour plusieurs porteuses de liaison descendante différentes, comprenant :

la réception (210) d'un ou plusieurs mots de code depuis le dispositif de communication sans fil (16) en tant que rapport d'information de commande de liaison montante ; et
le décodage de canal (220) de l'un ou plusieurs mots de code pour obtenir un ou plusieurs mots d'information qui comprennent des informations de commande de liaison montante pour plusieurs porteuses de liaison descendante différentes, en utilisant des informations de commande de liaison montante qui sont connues par la station de base (20) et qui sont intercalées à travers l'un ou plusieurs mots d'information avec des informations de commande de liaison montante non connues de la station de base (20),
dans lequel les informations de commande de liaison montante connues par la station de base (20) comprennent des informations de commande de liaison montante pour une ou plusieurs porteuses de liaison descendante non programmées, et dans lequel les informations de commande de liaison montante non connu de la station de base (20) comprennent des informations de commande de liaison montante pour une ou plusieurs porteuses de liaison descendante programmées, et
dans lequel l'un ou plusieurs mots d'information comprennent des informations de commande de liaison montante pour plusieurs porteuses de liaison descendante différentes qui sont configurées, et dans lequel une ou plusieurs des porteuses de liaison descendante configurées sont programmées et une ou plusieurs des porteuses de liaison descendante configurées ne sont pas programmées.

**12.** Procédé selon la revendication 11, comprenant en outre l'adaptation d'un livre de codes utilisé pour effectuer ledit décodage de canal sur la base du nombre de porteuses de liaison descendante différentes configurées, quel que soit le nombre de porteuses de liaison descendante configurées qui sont programmées.

**13.** Procédé selon la revendication 11, comprenant en outre l'adaptation d'un livre de codes utilisé pour effectuer ledit décodage de canal sur la base du nombre de porteuses de liaison descendante différentes activées, quel que soit le nombre de porteuses de liaison descendante configurées qui sont programmées.

**14.** Dispositif de communication sans fil (16) configuré pour signaler des informations de commande de liaison montante pour plusieurs porteuses de liaison descendante différentes à une station de base (20) dans un système de communication sans fil (10), dans lequel le dispositif de communication sans fil (16) est configuré pour :

intercaler des informations de commande de liaison montante connues par la station de base (20) avec des informations de commande de liaison montante non connues par la station de base (20) à travers un ou plusieurs mots d'information qui comprennent des informations de commande de liaison montante pour plusieurs porteuses de liaison descendante différentes ;
coder par canal l'un ou plusieurs mots d'information pour obtenir un ou plusieurs mots de code ; et
transmettre l'un ou plusieurs mots de code à la station de base (20) sous la forme d'un rapport d'informations de commande de liaison montante ;
dans lequel les informations de commande de liaison montante connues par la station de base (20) comprennent des informations de commande de liaison montante pour une ou plusieurs porteuses de liaison descendante non programmées, et dans lequel les informations de commande de liaison montante non connues par la station de base (20) comprennent des informations de commande de liaison montante pour une ou plusieurs porteuses de liaison descendante programmées, et
dans lequel l'un ou plusieurs mots d'information comprennent des informations de commande de liaison montante pour plusieurs porteuses de liaison descendante différentes qui sont configurées, et dans lequel une ou plusieurs des porteuses de liaison descendante configurées sont programmées et une ou plusieurs des porteuses de liaison descendante configurées ne sont pas programmées.

**15.** Station de base (20) configurée pour décoder les informations de commande de liaison montante reçues depuis un dispositif de communication sans fil (16) pour plusieurs porteuses de liaison descendante différentes, dans laquelle la station de base (20) est configurée pour :

recevoir un ou plusieurs mots de code depuis le dispositif de communication sans fil (16) en tant que rapport d'informations de commande de liaison montante ; et
décoder par canal l'un ou plusieurs mots de code pour obtenir un ou plusieurs mots d'information qui comprennent des informations de commande de liaison montante pour plusieurs porteuses de liaison descendante différentes, en utilisant des informations de commande de liaison montante qui sont connues par la station de base (20) et qui sont intercalées à travers l'un ou plusieurs mots d'information avec des informations de commande de liaison montante non connues de la station de base (20),
dans laquelle les informations de commande de liaison montante connues par la station de base (20) comprennent des informations de commande de liaison montante pour une ou plusieurs porteuses de liaison descendante non programmées, et dans laquelle les informations de commande de liaison montante non connues par la station de base (20) comprennent des informations de commande de liaison montante pour une ou plusieurs porteuses de liaison descendante programmées, et
dans laquelle l'un ou plusieurs mots d'information comprennent des informations de commande de liaison montante pour plusieurs porteuses de liaison descendante différentes qui sont configurées, et dans laquelle une ou plusieurs des porteuses de liaison descendante configurées sont programmées et une ou plusieurs des porteuses de liaison descendante configurées ne sont pas programmées.

EPAS, 10MHz, 2Rx, 1Tx, 64 bits encoded with Rel.8 TBCC and mapped to proposed PUSCH-like PUCCH format

FIGURE 1

FIGURE 2

EP 3 295 598 B1

100

Intersperse uplink control information known by the base station with uplink control information not known by the base station across one or more information words that comprise uplink control information for multiple different downlink carriers
110

Channel encode the one or more information words to obtain one or more codewords
120

Transmit the one or more codewords to the base station as an uplink control information report
130

**Figure 3**

Interspersed:

Information Word(s) 36

| BS-known UCI 30 | BS-unknown UCI 32 | BS-known UCI 30 |

**Figure 4A**

Interspersed:

Information Word(s) 36

| BS-unknown UCI 32 | BS-known UCI 30 | BS-unknown UCI 32 |

**Figure 4B**

Interspersed:

Information Word(s) 36

| BS-unknown UCI 32 | BS-known UCI 30 | BS-unknown UCI 32 | BS-known UCI 30 | BS-unknown UCI 32 | BS-known UCI 30 | BS-unknown UCI 32 |

**Figure 4C**

**NOT** Interspersed:

Information Word(s) 36

| BS-unknown UCI 32 | BS-known UCI 30 |

**Figure 4D**

UCI
Information Bits

↓

Interleaver
38

↓ Information
Word(s)

Channel Encoder
40

↓

Codeword(s)

**Figure 5**

UCI
Information Bits

↓

Error Detection
Encoder 42

↓ Error Detection
Encoded UCI
Information Bits

Interleaver
38

↓ Information
Word(s)

Channel Encoder
40

↓

Codeword(s)

**Figure 6**

Serving Cell Index Configuration

**Ncc Carriers:** | 0 | Ncc/2 | 1 | Ncc/2 + 1 | 2 | ... | Ncc/2 - 1 | Ncc - 1

**8 Carriers:** | 0 | 4 | 1 | 5 | 2 | 6 | 3 | 7

Frequency

**Figure 7A**

Serving Cell Index Configuration

**Ncc Carriers:** | 0 | 2 | 4 | ... | Ncc - 2 | 1 | 3 | 5 | Ncc - 1

**8 Carriers:** | 0 | 2 | 4 | 6 | 1 | 3 | 5 | 7

Frequency

**Figure 7B**

23

EP 3 295 598 B1

Serving Cell Index Configuration

8 Carriers:

| 0 | 4 | 2 | 6 | 1 | 5 | 3 | 7 |

Frequency

**Figure 7C**

Table 5.1.3-3: Turbo code internal interleaver parameters.

| $i$ | $K$ | $f_1$ | $f_2$ | $i$ | $K$ | $f_1$ | $f_2$ | $i$ | $K$ | $f_1$ | $f_2$ | $i$ | $K$ | $f_1$ | $f_2$ |
|---|---|---|---|---|---|---|---|---|---|---|---|---|---|---|---|
| 1 | 40 | 3 | 10 | 48 | 416 | 25 | 52 | 95 | 1120 | 67 | 140 | 142 | 3200 | 111 | 240 |
| 2 | 48 | 7 | 12 | 49 | 424 | 51 | 106 | 96 | 1152 | 35 | 72 | 143 | 3264 | 443 | 204 |
| 3 | 56 | 19 | 42 | 50 | 432 | 47 | 72 | 97 | 1184 | 19 | 74 | 144 | 3328 | 51 | 104 |
| 4 | 64 | 7 | 16 | 51 | 440 | 91 | 110 | 98 | 1216 | 39 | 76 | 145 | 3392 | 51 | 212 |
| 5 | 72 | 7 | 18 | 52 | 448 | 29 | 168 | 99 | 1248 | 19 | 78 | 146 | 3456 | 451 | 192 |
| 6 | 80 | 11 | 20 | 53 | 456 | 29 | 114 | 100 | 1280 | 199 | 240 | 147 | 3520 | 257 | 220 |
| 7 | 88 | 5 | 22 | 54 | 464 | 247 | 58 | 101 | 1312 | 21 | 82 | 148 | 3584 | 57 | 336 |
| 8 | 96 | 11 | 24 | 55 | 472 | 29 | 118 | 102 | 1344 | 211 | 252 | 149 | 3648 | 313 | 228 |
| 9 | 104 | 7 | 26 | 56 | 480 | 89 | 180 | 103 | 1376 | 21 | 86 | 150 | 3712 | 271 | 232 |
| 10 | 112 | 41 | 84 | 57 | 488 | 91 | 122 | 104 | 1408 | 43 | 88 | 151 | 3776 | 179 | 236 |
| 11 | 120 | 103 | 90 | 58 | 496 | 157 | 62 | 105 | 1440 | 149 | 60 | 152 | 3840 | 331 | 120 |
| 12 | 128 | 15 | 32 | 59 | 504 | 55 | 84 | 106 | 1472 | 45 | 92 | 153 | 3904 | 363 | 244 |
| 13 | 136 | 9 | 34 | 60 | 512 | 31 | 64 | 107 | 1504 | 49 | 846 | 154 | 3968 | 375 | 248 |
| 14 | 144 | 17 | 108 | 61 | 528 | 17 | 66 | 108 | 1536 | 71 | 48 | 155 | 4032 | 127 | 168 |
| 15 | 152 | 9 | 38 | 62 | 544 | 35 | 68 | 109 | 1568 | 13 | 28 | 156 | 4096 | 31 | 64 |
| 16 | 160 | 21 | 120 | 63 | 560 | 227 | 420 | 110 | 1600 | 17 | 80 | 157 | 4160 | 33 | 130 |
| 17 | 168 | 101 | 84 | 64 | 576 | 65 | 96 | 111 | 1632 | 25 | 102 | 158 | 4224 | 43 | 264 |
| 18 | 176 | 21 | 44 | 65 | 592 | 19 | 74 | 112 | 1664 | 183 | 104 | 159 | 4288 | 33 | 134 |
| 19 | 184 | 57 | 46 | 66 | 608 | 37 | 76 | 113 | 1696 | 55 | 954 | 160 | 4352 | 477 | 408 |
| 20 | 192 | 23 | 48 | 67 | 624 | 41 | 234 | 114 | 1728 | 127 | 96 | 161 | 4416 | 35 | 138 |
| 21 | 200 | 13 | 50 | 68 | 640 | 39 | 80 | 115 | 1760 | 27 | 110 | 162 | 4480 | 233 | 280 |
| 22 | 208 | 27 | 52 | 69 | 656 | 185 | 82 | 116 | 1792 | 29 | 112 | 163 | 4544 | 357 | 142 |
| 23 | 216 | 11 | 36 | 70 | 672 | 43 | 252 | 117 | 1824 | 29 | 114 | 164 | 4608 | 337 | 480 |
| 24 | 224 | 27 | 56 | 71 | 688 | 21 | 86 | 118 | 1856 | 57 | 116 | 165 | 4672 | 37 | 146 |
| 25 | 232 | 85 | 58 | 72 | 704 | 155 | 44 | 119 | 1888 | 45 | 354 | 166 | 4736 | 71 | 444 |
| 26 | 240 | 29 | 60 | 73 | 720 | 79 | 120 | 120 | 1920 | 31 | 120 | 167 | 4800 | 71 | 120 |
| 27 | 248 | 33 | 62 | 74 | 736 | 139 | 92 | 121 | 1952 | 59 | 610 | 168 | 4864 | 37 | 152 |
| 28 | 256 | 15 | 32 | 75 | 752 | 23 | 94 | 122 | 1984 | 185 | 124 | 169 | 4928 | 39 | 462 |
| 29 | 264 | 17 | 198 | 76 | 768 | 217 | 48 | 123 | 2016 | 113 | 420 | 170 | 4992 | 127 | 234 |
| 30 | 272 | 33 | 68 | 77 | 784 | 25 | 98 | 124 | 2048 | 31 | 64 | 171 | 5056 | 39 | 158 |
| 31 | 280 | 103 | 210 | 78 | 800 | 17 | 80 | 125 | 2112 | 17 | 66 | 172 | 5120 | 39 | 80 |
| 32 | 288 | 19 | 36 | 79 | 816 | 127 | 102 | 126 | 2176 | 171 | 136 | 173 | 5184 | 31 | 96 |
| 33 | 296 | 19 | 74 | 80 | 832 | 25 | 52 | 127 | 2240 | 209 | 420 | 174 | 5248 | 113 | 902 |
| 34 | 304 | 37 | 76 | 81 | 848 | 239 | 106 | 128 | 2304 | 253 | 216 | 175 | 5312 | 41 | 166 |
| 35 | 312 | 19 | 78 | 82 | 864 | 17 | 48 | 129 | 2368 | 367 | 444 | 176 | 5376 | 251 | 336 |
| 36 | 320 | 21 | 120 | 83 | 880 | 137 | 110 | 130 | 2432 | 265 | 456 | 177 | 5440 | 43 | 170 |
| 37 | 328 | 21 | 82 | 84 | 896 | 215 | 112 | 131 | 2496 | 181 | 468 | 178 | 5504 | 21 | 86 |
| 38 | 336 | 115 | 84 | 85 | 912 | 29 | 114 | 132 | 2560 | 39 | 80 | 179 | 5568 | 43 | 174 |
| 39 | 344 | 193 | 86 | 86 | 928 | 15 | 58 | 133 | 2624 | 27 | 164 | 180 | 5632 | 45 | 176 |
| 40 | 352 | 21 | 44 | 87 | 944 | 147 | 118 | 134 | 2688 | 127 | 504 | 181 | 5696 | 45 | 178 |
| 41 | 360 | 133 | 90 | 88 | 960 | 29 | 60 | 135 | 2752 | 143 | 172 | 182 | 5760 | 161 | 120 |
| 42 | 368 | 81 | 46 | 89 | 976 | 59 | 122 | 136 | 2816 | 43 | 88 | 183 | 5824 | 89 | 182 |
| 43 | 376 | 45 | 94 | 90 | 992 | 65 | 124 | 137 | 2880 | 29 | 300 | 184 | 5888 | 323 | 184 |
| 44 | 384 | 23 | 48 | 91 | 1008 | 55 | 84 | 138 | 2944 | 45 | 92 | 185 | 5952 | 47 | 186 |
| 45 | 392 | 243 | 98 | 92 | 1024 | 31 | 64 | 139 | 3008 | 157 | 188 | 186 | 6016 | 23 | 94 |
| 46 | 400 | 151 | 40 | 93 | 1056 | 17 | 66 | 140 | 3072 | 47 | 96 | 187 | 6080 | 47 | 190 |
| 47 | 408 | 155 | 102 | 94 | 1088 | 171 | 204 | 141 | 3136 | 13 | 28 | 188 | 6144 | 263 | 480 |

**Figure 7D**

**Ncc Carriers:**

Serving Cell Index Configuration

| 0 | 1 | 2 | 3 | 4 | 5 | ... | Ncc |
|---|---|---|---|---|---|-----|-----|

Scheduled Carriers

**Figure 8**

200

```
┌─────────────────────────────────────────────────────────────┐
│                                                             │
│   Receive one or more codewords from the wireless           │
│   communication device as an uplink control information     │
│   report                                                    │
│                            210                              │
│                                                             │
└─────────────────────────────────────────────────────────────┘
                              │
                              ▼
┌─────────────────────────────────────────────────────────────┐
│                                                             │
│   Channel decode the one or more codewords to obtain one or │
│   more information words that comprise uplink control       │
│   information for multiple different downlink carriers,      │
│   using uplink control information that is known by the base │
│   station and is interspersed across the one or more        │
│   information words with uplink control information not      │
│   known by the base station                                 │
│                            220                              │
│                                                             │
└─────────────────────────────────────────────────────────────┘
```

**Figure 9**

Figure 10

Sub-Block 48

Block Code Encoder 50

Block Code Encoder 50

Combiner 52

Codeword 54

Block Code Splitter 46

Sub-Block 48

Block 44

**Figure 11**

Wireless Communication Device
16

Processing Circuit(s)
330

Mem
340

Comm. Interface(s)
350

Interspersing Unit
300

Channel Encoding Unit
310

Transmitting Unit
320

Figure 12

Figure 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62162275

- US 2011243066 A1

**Non-patent literature cited in the description**

- **ERICSSON et al.** Evaluation of PUCCH Proposals for Carrier Aggregation. *3GPP Mobile Competence Centre,* 04 May 2010

- **ALCATEL-LUCENT SHANGHAI BELL et al.** UCI Multiplexing on PUSCH in case of SU-MIMO. *3GPP Mobile Competence Centre,* 07 May 2010